(19) Europäisches Patentamt
European Patent Office
Office européen des brevets

(11) EP 2 139 965 B1

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(21) Anmeldenummer: **08735827.1**

(22) Anmeldetag: **04.04.2008**

(51) Int Cl.:
*C09J 7/02* (2006.01) *G02F 1/13357* (2006.01)

(86) Internationale Anmeldenummer:
**PCT/EP2008/054086**

(87) Internationale Veröffentlichungsnummer:
**WO 2008/128869 (30.10.2008 Gazette 2008/44)**

(54) **VERFAHREN ZUR HERSTELLUNG EINES DOPPELSEITIGEN HAFTKLEBEBANDES**

PROCESS FOR PRODUCING A DOUBLE-SIDED PRESSURE-SENSITIVE ADHESIVE TAPE

PROCÉDÉ DE FABRICATION D'UNE BANDE AUTOADHÉSIVE DOUBLE FACE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.04.2007 DE 102007019131**

(43) Veröffentlichungstag der Anmeldung:
**06.01.2010 Patentblatt 2010/01**

(73) Patentinhaber: **TESA SE**
**20253 Hamburg (DE)**

(72) Erfinder:
- **HUSEMANN, Marc**
  **D-22559 Hamburg (DE)**
- **PETERS, Markus**
  **27283 Verden (DE)**

(74) Vertreter: **Heins, Matthias**
**Tesa AG**
**Quickbornstraße 24**
**Brieffach 645**
**D-20253 Hamburg (DE)**

(56) Entgegenhaltungen:
**EP-A- 1 520 896**
**WO-A-2005/019367**
**US-B1- 6 458 467**

EP 2 139 965 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung doppelseitiger Haftklebebänder zur Verklebung von Reflektionsfolien in Rückseitenbeleuchtungseinheiten von LC-Displays.

Haftklebebänder sind im Zeitalter der Industrialisierung weitverbreitete Verarbeitungshilfsmittel. Insbesondere für den Einsatz in der Elektronikindustrie werden an Haftklebebänder sehr hohe Anforderungen gestellt. Sie sollten ein geringes Ausgasungsverhalten zeigen und in einem weiten Temperaturbereich einsetzbar sein, geringe Fertigungstoleranzen aufweisen und möglichst hohe Verklebungsfestigkeiten bei möglichst geringer Gesamtdicke garantieren.

Ein Einsatzgebiet sind Flüssigkristall-Datenanzeigesysteme (Liquid Crystal Displays, LC-Displays, LCDs), die für Computer, Fernsehgeräte, Laptops, PDA's, Mobiltelefone, Digitale Kameras etc. benötigt werden. Ein sehr verbreiteter Typ eines LCD-Moduls für solche Anwendungen ist in Fig. 1 beispielhaft dargestellt. Dabei zeigen

1 LCD-Glas
2 doppelseitiges schwarz-weißes Klebeband
3 Haftklebemasse
4 Lichtquelle (LED)
5 Lichtstrahlen
6 doppelseitiges Klebeband
7 Lichtleiter
8 Reflektionsfolie
9 LCD-Gehäuse
10 schwarze absorbierende Klebebandseite
11 reflektierende Seite
12 sichtbarer Bereich
13 "blinder" Bereich

Zur Herstellung von LC-Displays wird die Rückseitenbeleuchtungseinheit mit dem eigentlichen LC-Display verklebt.

Im Zuge der Miniaturisierung wird es zunehmend erforderlich, dass die Designer den gesamten Aufbau des LC-Displays immer dünner gestalten.

In dem Gehäuse der Rückseitenbeleuchtungseinheit ist eine Reflexionsfolie installiert, die die Funktion erfüllt, das ausstrahlende Licht von der Leuchtdioden-Einheit (LED-Einheit; Light Emitting Diode) gleichmäßig zum LC-Display zu reflektieren. Dabei muss man eine möglichst gleichmäßige Lichtverteilung erreichen, damit nachher im Display keine hellen Lichtspots zu erkennen sind. Eine Vorraussetzung dafür ist eine sehr gute Planlage der Reflektionsfolie, da ansonsten durch Unebenheiten die Lichtreflektion gestört wird. Daher wird diese Reflexionsfolie - um z.B. Lufteinschlüsse zwischen ihr und dem Gehäuse zu vermeiden - bevorzugt mit einem doppelseitigen Klebeband fixiert.

Die Fixierung der Rückseitenbeleuchtungseinheit in dem Gehäuse erfolgt häufig durch doppelseitige Klebebänder, die die vorgenannten Anforderungen bezüglich der Planlage erfüllen müssen. Man war daher bisher davon ausgegangen, dass diese Klebebänder eine hinreichende Stabilität aufweisen müssen, so dass hierfür nur doppelseitige Klebebänder mit hinreichend festen und stabilen Trägerfolien einzusetzen wären. Solche Trägerfolien haben allerdings den Nachteil, dass sie immer auch Dickentoleranzen aufweisen, also nicht über die gesamte Fläche eine exakte Dicke aufweisen. Hingegen wäre zu erwarten gewesen, dass sehr dünne Folien keine genügende Stabilität aufweisen würden, sich somit wellen würden und somit auch keine Planarität gewährleisten könnten.

Auch eine starke Verdünnung der Klebemassenschichten wurde nicht in Betracht gezogen, da dies erwartungsgemäß zu schlechten Klebkräften führen sollte und somit die erforderliche Festigkeit des Klebegefüges von der Reflexionsfolie auf dem Gehäuse nicht gewährleistet schien.

Die EP 1 520 896 A beschreibt ein doppelseitiges Klebeband bestehend aus einer Polyester-Trägerfolie mit einer Dicke von 2 μm sowie zwei Klebeschichten mit einer Dicke von jeweils 4 μm auf beiden Seiten der Folie. Die Schrift beschreibt zudem den Einsatz derartiger Klebebänder zur Verklebung von Reflexionsfolien in Rückseitenbeleuchtungseinheiten.

Aufgabe der Erfindung ist es daher, insbesondere für die Verwendung zur Verklebung von Reflektionsfolien in Rückseitenbeleuchtungseinheiten von LC-Displays ein Herstellungsverfahren für ein doppelseitiges Haftklebeband anzubieten, bei dem die Dickentoleranzen minimiert werden und welches eine verbesserte Alternative zu den Herslellungsverfahren für Klebefolien nach dem Stand der Technik aufweist.

Die Anwendung erfordert insbesondere doppelseitige Klebebänder mit möglichst geringer Gesamtdicke, möglichst geringen Dickentoleranzen und einer guten Verarbeitungseigenschaft im Verklebungsprozess.

Im Rahmen dieser Erfindung wurde überraschender Weise gefunden, dass doppelseitige Haftklebebänder mit sehr dünnen Trägerfolien die nötige Stabilität für den Verarbeitungsprozess aufweisen, eine hohe Verklebungsfestigkeit

bei geringer Gesamtdicke ermöglichen und daher sehr gut für die Verklebung von Reflektionsfolien in Rückseitenbeleuchtungseinheiten geeignet sind.

Die Erfindung betrifft ein Verfahren zur Herstellung eines doppelseitigen Klebebandes aus einer Trägerfolie und zwei Haftklebemassenschichten, das zur Verklebung von Reflexionsfolien in Rückseitenbeleuchtungseinheiten von Flüssigkristallsystemen geeignet ist, mit einer Gesamtdicke (Mittelwert) des Klebebandes von weniger als 30 µm und einer Standardabweichung der Gesamtdicke des Klebebandes von weniger als 1,25 µm,
wobei

- eine erste Haftklebemasse aus Lösung auf einen ersten Release Liner beschichtet wird und die erste Haftklebemasse nach der Beschichtung in einem Trockenkanal vom Lösungsmittel befreit wird, so dass eine erste Haftklebemassenschicht auf dem ersten Release Liner entsteht,
- eine zweite Haftklebemasse aus Lösung auf einen zweiten Release Liner beschichtet wird und die zweite Haftklebemasse nach der Beschichtung in einem Trockenkanal vom Lösungsmittel befreit wird, so dass eine zweite Haftklebemassenschicht auf dem zweiten Release Liner entsteht,
- nach der Trocknung der ersten Haftklebemasse eine Trägerfolie zu der ersten Haftklebemassenschicht kaschiert wird,
- die zweite Haftklebemassenschicht nach deren Trocknung auf die noch freie Seite der Trägerfolie kaschiert wird,

und wobei die Beschichtung der ersten Haftklebemasse auf den ersten Release Liner sowie die Beschichtung der zweiten Haftklebemasse auf den zweiten Release Liner jeweils mittels eines Fünfwalzenauftragswerkes bewirkt wird.

Die erfindungsgemäß hergestellten doppelseitigen Haftklebebänder weisen einen mehrschichtigen Aufbau und eine Gesamtdicke (Mittelwert) von kleiner 30 µm auf. Insbesondere sind Haftklebebänder zur Lösung der erfindungsgemäßen Aufgabe geeignet, deren Gesamtdicke (Mittelwerte) < 25 µm, bevorzugt < 20 µm, bevorzugter < 10 µm, ganz besonders bevorzugt < 5 µm beträgt.

Als Gesamtdicke im Rahmen dieser Schrift wird die arithmetische Mittlung über die Einzelmesswerte (vgl. experimenteller Teil) verstanden.

Ein weiteres Kriterium für die erfindungsgemäß hergestellten Haftklebebänder ist deren Ebenheit, also die Gleichmäßigkeit der Dicke des Klebebandes (der Gesamtdicke). Diese lässt sich durch die Standardabweichung s nach

$$s = \sqrt{\frac{1}{n} \cdot \sum_{i=1}^{n} \left(x_i - \bar{x}\right)^2}$$

angeben, wobei n die Anzahl der bestimmten Datenwerte, $x_i$ die einzelnen Messwerte und x den Mittelwert aller Messwerte angibt. Je geringer s ist, desto gleichmäßiger ist das Klebeband bezüglich seiner Dicke.

Der Wert von 4s (also dem Vierfachen der Standardabweichung s) wird häufig als sogenannte Schichtdickentoleranz, Spezifikationsgrenze oder auch als maximale Abweichung der Dickentoleranz bezeichnet.

Das erfindungsgemäß hergestellte Klebeband besitzt insbesondere eine Schichtdickentoleranz 4s von < 5 µm; bevorzugt < 3 µm, bevorzugter < 2,5 µm, ganz bevorzugt < 2 µm und weist damit eine sehr hohe Gleichmäßigkeit in der Gesamtdicke auf.

Dabei korrellieren insbesondere kleine Standardabweichungen (entsprechend kleine Schichtdickentoleranzen) mit kleinen Gesamtdicken. Einzelne Beispiele sind erfindungsgemäße - insbesondere dreischichtige - Klebebänder, die eine Dicke von < 20 µm mit einer Toleranz von < 5 µm, besser kleiner 3 µm aufweisen; weiterhin solche, die eine Dicke von < 10 cm mit einer Toleranz von < 3 µm, besser < 2,5 µm aufweisen. Als ganz besonders hervorragend hat sich ein dreischichtiges Klebeband herausgestellt, dessen Gesamtdicke weniger als 5 µm beträgt (Trägerfoliendicke < 1 µm, Haftklebemassenschichtendicke beidseitig der Trägerfolienschicht jeweils < 2 µm); wobei die Schichtdickentoleranz (4s Spezifikationsgrenze) auf < 3 µm, in besseren Ausführungsformen auf < 2,5 µm, in noch verbesserten Ausführungsformen auf < 1 µm gesenkt werden konnte.

Einen beispielhaften Produktaufbau der erfindungsgemäß hergestellten Haftklebebänder zeigt beispielhaft die Figur 2. Hier bezeichnen (a) die Trägerfolienschicht und (b) und (b') die Klebmassenschichten.

Produktaufbau

Das erfindungsgemäß hergestellte Haftklebeband besteht aus einer Trägerfolienschicht (a) und zwei Haftklebeschichten (b) und (b)', wobei die Haftklebemassen identisch sein oder sich voneinander unterscheiden können, und zwar sowohl im Hinblick auf deren Schichtdicke als auch auf die chemische Zusammensetzung.

Zur Verbesserung der Verarbeitungseigenschaften des doppelseitigen Haftklebebandes wird dieses in einer

sehr bevorzugten Auslegung mit mindestens einem Releaseliner ausgestattet. Dieser ermöglicht das Abrollen des doppelseitigen Klebebandes sowie die Weiterverarbeitung in Stanzprozessen sowie in Blattform. Weiterhin kann es erforderlich sein, dass das doppelseitige Haftklebeband mit zwei Releaselinern ausgestattet ist, dass heißt beide Klebemasseseiten werden mit einem oder unterschiedlichen Releaselinern abgedeckt. Dies kann sehr vorteilhaft beim Stanzen dieser Produkte sein; insbesondere in Hinblick darauf, dass der Stanzprozess bei sehr dünnen Haftklebebändern erhöhte Anforderungen stellt.

Die Gesamtdicke des doppelseitigen Haftklebebandes beträgt nicht mehr als 30 $\mu$m (Angabe ohne Einbezug der gegebenenfalls vorhandenen Releaseliner).

In einer bevorzugten Ausführungsform beträgt die Schichtdicke des doppelseitigen Haftklebebandes zwischen 2 und 29 $\mu$m, sehr bevorzugt zwischen 3 und 21 $\mu$m.

Durch die geringe Trägerfolien-Schichtdicke weist das doppelseitige Haftklebeband eine sehr gute Flexibilität auf, die es auch ermöglicht, sehr geringe Mikrostrukturierungen auf den Substraten (z.B. auf der Reflektionsfolie oder auf dem Kunststoffgehäuse) zu kompensieren und durch ein gutes Benetzungsverhalten der Klebemasse eine hohe Klebleistung zu erzielen. Trotzdem konnte überraschenderweise die notwendige Stabilität gewährleistet werden.

Trägerfolie (a)

Die Trägerfolie (a) weist bevorzugt eine Schichtdicke von 0,5 bis 12 $\mu$m auf, mehr bevorzugt zwischen 0,9 und 8 $\mu$m, äußerst bevorzugt zwischen 0,9 und 2 $\mu$m.

Als Folienträger können prinzipiell alle filmischen Polymerträger eingesetzt werden. So lassen sich z.B. Polyethylen, Polypropylen, Polyethersulfone, Polyamide, Polyimide, Polyetherimide, Polyester, Polyphenylsulfide, Polyamidimide, Polyetherimide, Polymethacrylate, Styrol-basierende Filme, Polycarbonate, Polyetherketone, Polyaryle, Polyurethane, Polyacrylate, Polybutyrale, Polyethylenvinylacetate, Polyethylennaphthylate und fluorierte Polymere einsetzen. Diese Polymertypen lassen sich allein oder in Kombination miteinander einsetzen. In einer besonders bevorzugten Vorgehensweise werden Polyesterfolien eingesetzt, besonders bevorzugt PET-Folien (Polyethylenterephthalat). Im Hinblick auf die erfindungsgemäß vorteilhafte Verwendung weisen PET-Folien eine hohe Reißfestigkeit sowie eine sehr gute Dickentoleranz auf. Die absolute Dickentoleranz wird dabei durch die Verwendung von immer dünneren Folien immer besser.

Als erfindungsgemäß besonders geeignet haben sich Kondensatorfolien gezeigt, also solche Kunststofffolien, wie sie für Kunststofffolien-Kondensatoren, die für gewöhnlich aus mehreren Lagen Metallfolie und Kunststofffolie ("Dielektrikumsfolie") bestehen. Für den Einsatz als Trägerfolie für das erfindungsgemäße Haftklebeband werden diese Kondensatorfolien bevorzugt in nicht metallisierter Form eingesetzt (für die Anwendung in Kondensatoren werden die Folien üblicherweise metallisiert, beispielsweise durch Bedampfung bzw. Besputterung). Besonders bevorzugt einsetzbare Koindensatorfolien bestehen beispielsweise aus Polyester.

Geeignete Folien sind z.B. von der Firma Mitsubishi Polyester Films unter dem Handelsnamen Hostaphan™ erhältlich. Insbesondere die Typen mit den Bezeichnungen RE SMD, RE, TT sowie RNK sind geeignet.

Im Hinblick auf die Dickentoleranz weist die Folie bevorzugt eine maximale Abweichung von 0,5 $\mu$m auf (Spezifikationsgrenze 4s), äußerst bevorzugt von 0,2 $\mu$m auf.

Vorteilhaft besitzt der Träger einen Einzelschichtaufbau, kann aber auch aus mehreren Schichten aufgebaut sein.

Die Trägerdicke (a) liegt unterhalb der Gesamtdicke des doppelseitigen Klebebandes, um die beidseitige Ausstattung mit der Haftklebemasse (b) oder (b') zu ermöglichen. Die Dicke des Klebebandes ergibt sich aus der dicke der Trägerschicht, der beiden Haftklebemassenschichten und ggf. weiterer optional vorhandener Schichten.

In einer bevorzugten Ausgestaltung insbesondere bei dreischichtigen Klebebändern beträgt die Differenz zwischen Schichtdicke des Trägers (a) und der Summe der Schichtdicken der Haftklebemasse (b) und (b') nicht mehr als 29 $\mu$m, sehr bevorzugt kleiner 20 $\mu$m, äußerst bevorzugt kleiner 15 $\mu$m.

Die Schichtdicke der Klebmassenschichten hat einen Einfluss auf die Klebkraft des doppelseitigen Klebebandes. Vorteilhaft wird derart vorgegangen, dass das Klebeband eine für den jeweiligen Einsatzzweck, insbesondere für die Anwendung in elektronischen Bauteilen in der im Rahmen dieser Schrift dargestellten Weise, hinreichende Klebkraft aufweist. Hierzu ist es sehr vorteilhaft, wenn die Klebemassenschichten jeweils mindestens 0,5 $\mu$m, bevorzugt jeweils 1 $\mu$m dick sind.

Die Trägerfolien (a) können entspannt sein oder eine oder mehrere Vorzugsrichtungen aufweisen. Vorzugsrichtungen werden erzielt durch Streckung in einer, zwei oder auch mehreren insbesondere in der Folienebene liegenden Richtungen, wobei im Falle von zwei Streckungen insbesondere derart vorgegangen werden kann, dass die Streckrichtungen im rechten Winkel zueinander gewählt werden.

Die entspannte Form ist für die erfinderische Anwendung zu bevorzugen, da in der Regel bei den Beschichtungsprozessen sowie in der finalen Anwendung bei möglichen späteren Klimawechseln keine dimensionale Veränderung der Trägerfolie mehr eintreten kann.

Vorteilhaft werden den Folien im Herstellprozess [z.B. bei der Herstellung von Polyethylenterephthalat-Folien (PET-Folien)] Antiblockmittel, wie z.B. Siliciumdioxid, Kieselkreide oder Kreide, Zeolithe oder dergleichen zugesetzt.

Für die erfinderischen Haftklebebänder lassen sich sehr bevorzugt Folien einsetzen, die eine möglichst geringe Rauhigkeit aufweisen. Diese beinhalten bevorzugt nur wenige Antiblockmittel, haben also einen geringen Antiblockmittelgehalt.

Weiterhin kann es für die Erfindung vorteilhaft sein, die Trägerfolie (a) einzufärben oder vorzubehandeln. Einfärbungen können beispielsweise wünschenswert sein, um das Detektionsverhalten im Stanzprozess nach dem eigentlichen Stanzen zu verbessern (insbesondere vorteilhaft bei sehr dünnen Folien). Hierfür kann die Trägerfolie durch das sogenannten 'Masterbatchverfahren' selbst eingefärbt sein, (z.B. das PET enthält bereits vor der Folienextrusion die Farbpigmente), oder mit einer Lackierung oder einem gefärbten Primer versehen werden. Des Weiteren kann es auch von Vorteil sein, wenn die Trägerfolie (a) vorbehandelt wird, um die Verankerung der Haftklebemasse (b) und (b') auf der Trägerfolie zu verbessern. Zur Vorbehandlung können physikalische und/oder chemische Methoden angewendet werden. So eignen sich z.B. Plasma-, Corona,- und/oder Flammenvorbehandlungen, die Auftragung von Haftvermittlern (Primern) und/oder chemische Ätzverfahren

Haftklebemassen (b) und (b)'

Die Haftklebemassen (b) und (b)' sind vorteilhaft auf beiden Seiten des Haftklebebandes identisch. Es kann aber auch - je nach Anwendung - von Vorteil sein, wenn sich die Haftklebemassen (b) und (b)' voneinander unterscheiden, insbesondere durch ihre Schichtdicken und/oder ihre chemischen Zusammensetzungen. So lassen sich auf diesem Weg z.B. unterschiedliche haftklebrige Eigenschaften einstellen. Als Haftklebemassensysteme für das erfinderische doppelseitige Haftklebeband werden besonders bevorzugt Acrylat-, Naturkautschuk-, Synthesekautschuk-, Silikon- oder EVA-Kleber eingesetzt.

Es lassen sich aber grundsätzlich auch alle weiteren, dem Fachmann bekannten Haftklebemassen verarbeiten [vgl. zum Stand des Fachwissens beispielsweise das "Handbook of Pressure Sensitive Adhesive Technology" von Donatas Satas (van Nostrand, New York 1989].

Für Naturkautschukklebemassen wird der Naturkautschuk bis zu einem Molekulargewicht (Gewichtsmittel) nicht unter etwa 100.000 Dalton, bevorzugt nicht unter 500.000 Dalton gemahlen und additiviert.

Bei Kautschuk/Synthesekautschuk als Ausgangsmaterial für den Kleber sind weite Variationsmöglichkeiten gegeben. Eingesetzt werden können Naturkautschuke oder Synthesekautschuke oder beliebige Blends aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können Kautschuke zur Verbesserung der Verarbeitbarkeit thermoplastische Elastomere mit einem Gewichtsanteil von 10 bis 50 Gew.-% zugesetzt werden, bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

In einer erfindungsgemäß bevorzugten Vorgehensweise werden (Meth)acrylathaftklebemassen eingesetzt (diese Bezeichnung umfasst im Rahmen dieser Schrift Haftklebemassen auf Basis von Polyacrylaten und/oder Polymethacrylaten).

(Meth)acrylathaftklebemassen, welche durch radikalische Polymerisation erhältlich sind, bestehen bevorzugt zu mindestens 50 Gew.-% auf zumindest einem acrylischen Monomer aus der Gruppe der Verbindungen der folgenden allgemeinen Formel:

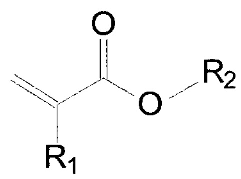

Dabei ist $R_1$ = H oder $CH_3$, und der Rest $R_2$ ist H oder $CH_3$ oder wird gewählt wird aus der Gruppe der verzweigten oder unverzweigten, gesättigten Alkylgruppen mit 1 bis 30 Kohlenstoffatomen.

Die Monomere werden bevorzugt dermaßen gewählt, daß die resultierenden Polymere bei Raumtemperatur oder höheren Temperaturen als Haftklebemassen eingesetzt werden können. Zur Anwendung als Haftkleber sind die

Anteile der entsprechenden Monomere derart gewählt, dass das Polymerisationsprodukt insbesondere eine Glastemperatur ($T_G$) ≤ 15 °C aufweist. Die Monomere werden bevorzugt dermaßen gewählt, dass die resultierenden Polymere bei Raumtemperatur als Haftklebemassen eingesetzt werden können, insbesondere derart, dass die resultierenden Polymere haftklebrige Eigenschaften entsprechend des "Handbook of Pressure Sensitive Adhesive Technology" von Donatas Satas (van Nostrand, New York 1989, Seite 444 - 514) besitzen. Die Glasübergangstemperatur der der Haftklebemassen zugrunde liegenden Polymere liegt vorteilhaft unterhalb 15°C im Sinne einer dynamischen Glasübergangstemperatur für amorphe Systeme und der Schmelztemperatur für semikristalline Systeme, die durch dynamisch mechanische Analyse (DMA) bei geringen Frequenzen bestimmt werden können.

In einer weiteren erfinderischen Auslegung wird die Comonomerzusammensetzung derart gewählt, dass sich die Haftklebemassen als hitzeaktivierbare Haftklebemassen einsetzen lassen. Für die Anwendung einer hitzeaktivierbaren Haftklebemasse (oder eines Heißschmelzklebers), also eines Materials, welches erst durch Erwärmen haftklebrig wird, werden die Anteile der Monomere insbesondere derart gewählt, dass das Copolymer eine Glasübergangstemperatur ($T_G$) zwischen 15 °C und 100 °C aufweist, bevorzugt zwischen 30 °C und 80°C, besonders bevorzugt zwischen 40°C und 60°C, im Sinne dynamischer Glasübergangstemperaturen für amorphe Systeme und Schmelztemperaturen für semikristalline Systeme, die durch dynamisch mechanische Analyse (DMA) bei geringen Frequenzen bestimmt werden können.

Die Polymere lassen sich bevorzugt durch Polymerisation einer Monomermischung gewinnen, welche sich aus Acrylsäureestern und/oder Methacrylsäureestern und/oder deren freien Säuren mit der Formel $CH_2 = C(R_1)(COOR_2)$ zusammensetzt, wobei $R_1$ = H oder $CH_3$ und $R_2$ eine Alkylkette mit 1 - 20 C-Atomen oder H ist.

Die Molmassen $M_w$ der eingesetzten Polyacrylate betragen bevorzugt $M_w$ ≥ 200.000 g/mol (Bestimmung mittels Gelpermeationschromatographie, vgl. experimenteller Teil).

In einer sehr bevorzugten Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus mindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N,N-Dimethylmethaacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Butoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Vorgehensweise Photoinitiatoren mit einer copolymerisierbaren Doppelbindung eingesetzt. Als Photoinitiatoren sind Norrish-I- (α-spaltende, photofragmentierende) und Norrish-II- (intramolekular wasserstoffabstrahierende) Photoinitiatoren geeignet. Beispiele sind Benzoinacrylat und acrylierte Benzophenone, beispielsweise ein solches der Fa. UCB (Ebecryl P 36®). Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren die mit einer Doppelbindung funktionalisiert werden können, wird in Fouassier: "Photoinitiation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Zur Weiterentwicklung können den Haftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Auch hier werden zur Verbesserung der Transparenz bevorzugt transparente und sehr gut mit dem Polymer verträgliche Harze eingesetzt. Hydrierte oder teilhydrierte Harze weisen häufig diese Eigenschaften auf.

Weiterhin können optional Weichmacher (Plastifizierungsmittel), weitere Füllstoffe (wie. z. B. Fasern, Ruß, Zinkoxid, Kreide, Voll- oder Hohlglaskugeln, Mikrokugeln aus anderen Materialien, Kieselsäure, Silikate), Keimbildner, elektrisch leitfähige Materialien, wie z.B. konjugierte Polymere, dotierte konjugierte Polymere, Metallpigmente, Metallpartikel, Metallsalze, Graphit, etc., Blähmittel, Compoundierungsmittel und/oder Alterungsschutzmittel, z.B. in Form von primären und sekundären Antioxidantien oder in Form von Lichtschutzmitteln zugesetzt sein.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate zugesetzt sein.

Zu einer optionalen Vernetzung mit UV-Licht können den Haftklebemassen UVabsorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinitiatoren können bevorzugt folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

**Herstellverfahren für die Acrylathaftklebemassen**

Die Natur des herzustellenden Polyacrylats (Haftklebemasse; Heißsiegelmasse und dergleichen) lässt sich insbesondere über eine Variation der Glasübergangstemperatur des Polymers durch unterschiedliche Gewichtsanteile der einzelnen Monomere beeinflussen.

Für rein kristalline Systeme gibt es am Schmelzpunkt $T_S$ ein thermisches Gleichgewicht zwischen Kristall und Flüssigkeit. Amorphe oder teilkristalline Systeme sind hingegen durch die Umwandlung der mehr oder weniger harten amorphen bzw. teilkristallinen Phase in eine weichere (gummiartige bis zähflüssige) Phase gekennzeichnet. Am Glaspunkt kommt es insbesondere bei polymeren Systemen zum "Auftauen" (bzw. "Einfrieren" beim Abkühlen) der Brownschen Molekularbewegung längerer Kettensegmente.

Der Übergang vom Schmelzpunkt $T_S$ (auch "Schmelztemperatur"; eigentlich nur für reinkristalline Systeme definiert; "Polymerkristalle") zum Glasübergangspunkt $T_G$ (auch "Glasübergangstemperatur", "Glastemperatur") kann daher als fließend angesehen werden, je nach dem Anteil der Teilkristallinität der untersuchten Probe.

Im Rahmen dieser Schrift wird im Sinne der vorstehenden Ausführen bei der Angabe des Glaspunktes der Schmelzpunkt mit umfasst, es wird also als Glasübergangspunkt (oder gleichbedeutend auch als Glasübergangstemperatur) auch der Schmelzpunkt für die entsprechenden "schmelzenden" Systeme verstanden. Die Angaben der Glasübergangstemperaturen beziehen sich auf die Bestimmung mittels dynamisch mechanischer Analyse (DMA) bei geringen Frequenzen.

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur Fox-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist beispielsweise im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die mittleren Molekulargewichte $M_W$ der bei der radikalischen Polymerisation entstehenden Haftklebemassen werden sehr bevorzugt derart gewählt, dass sie in einem Bereich von 200.000 bis 4.000.000 g/mol liegen; speziell für die weitere erfindungsgemäßen Verwendungen werden Haftklebemassen mit mittleren Molekulargewichten $M_W$ von 400.000 bis 1.400.000 g/mol hergestellt. Die Molmassenverteilungen können auch bimodal oder multimodal sein. Die Bestimmung des mittleren Molekulargewichtes erfolgt über Größenausschlußchromatographie (GPC; vgl. experimenteller Teil).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - bevorzugt zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für thermisch zerfallende Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die (Meth)acrylathaftklebemassen in Substanz zu polymerisieren. Hier eignet sich insbesondere die Präpolymerisationstechnik. Die Polymerisation wird mit UV-Licht initiiert, aber nur zu einem geringen Umsatz ca. 10 - 30 % geführt. Anschließend kann dieser Polymersirup z.B. in Folien eingeschweißt

werden (im einfachsten Fall Eiswürfel) und dann in Wasser zu hohem Umsatz durchpolymerisiert. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im Allgemeinen durch die Struktur $P_L(A)$-Me repräsentiert, wobei Me ein Metall der Gruppe I, wie z.B. Lithium, Natrium oder Kalium, und $P_L(A)$ ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Poly(meth)acrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

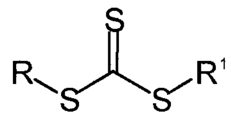

(I)

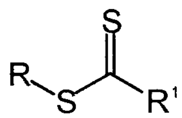

(II)

worin R und $R^1$ unabhängig voneinander gewählt oder gleich sind und aus der Gruppe der folgenden Substituenten gewählt wird; enthaltend

- verzweigte und unverzweigte $C_1$- bis $C_{18}$-Alkylreste; $C_3$- bis $C_{18}$-Alkenylreste; $C_3$-bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff.

Kontrollreagenzien des Typs (I) bestehen bevorzugt aus folgenden weiter eingeschränkten Verbindungen:

Halogenatome sind bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinyle mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl oder Hydroxyhexyl.

Beispiele für Halogen-substituierte Alkylreste sind Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.

Als $C_3$-$C_{12}$-Cycloalkylreste dienen beispielsweise Cyclopropyl, Cyclopentyl, Cyclohexyl oder Trimethylcyclohexyl.

Als $C_6$-$C_{18}$-Arylreste dienen beispielsweise Phenyl, Naphthyl, Benzyl, 4-tert.-Butylbenzyl- oder weitere substituierte Phenyl, wie z.B. Ethylphenyl, Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

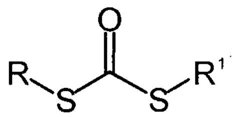

(III)

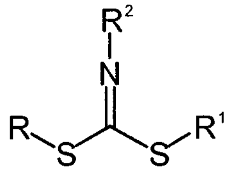

(IV)

wobei $R^2$ ebenfalls unabhängig von R und $R^1$ aus der oben aufgeführten Gruppe für diese Reste gewählt werden kann.

Beim konventionellen ’RAFT-Prozeß’ wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

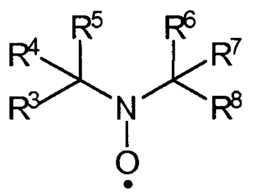

(Va)

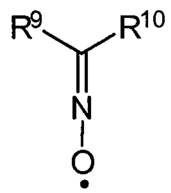

(Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod

ii) lineare, verzweigte, cyclische und heterocyclische Kohlenwasserstoffe mit 1 bis 20 Kohlenstoffatomen, die gesättigt, ungesättigt oder aromatisch sein können,

iii) Ester $-COOR^{11}$, Alkoxide $-OR^{12}$ und/oder Phosphonate $-PO(OR^{13})_2$, wobei $R^{11}$, $R^{12}$ oder $R^{13}$ für Reste aus der Gruppe ii) stehen.

Verbindungen der (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.

Mehr bevorzugt ausgewählt werden kontrollierte Polymerisations-Regler des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid.

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten.

Als weitere kontrollierte Polymerisationsmethode lässt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

**Release Liner**

Das doppelseitige Haftklebeband kann ein- oder doppelseitig mit einem Releaseliner ausgestattet sein. Der oder die Releaseliner verhindern, dass beim Aufrollen des Klebebandes die Haftklebemassen (b) und (b') miteinander verkleben. Für die erfindungsgemäße Verwendung der doppelseitigen Haftklebebänder sollten die Releaseliner eine möglichst geringe Rauhigkeit aufweisen. So lassen sich Release Liner basierend auf Kunststofffilmen, Papieren, gewebten Materialien und/oder Metallfolien einsetzen. Als Papiere sind z.B. Glassine-Papiere oder 'Clay-gecoatete' (kolinbeschichtete) Papiere einsetzbar. Die Dicke des Basismaterials beträgt bevorzugt zwischen 10 und 500 $\mu$m, in Abhängigkeit von dem späteren Verarbeitungsverfahren.

In einer sehr bevorzugten Auslegung werden als Basismaterialien für die Releaseliner Kunstofffolien eingesetzt. Die können z.B. auf Polyethylen, Polypropylen, Polyethersulfone, Polyamide, Polyimide, Polyetherimide, Polyester, Polyphenylsulfide, Polyamidimide, Polyetherimide, Polymethacrylate, Styrol-basierende Filme, Polycarbonate, Polyetherketone, Polyaryle, Polyurethane, Polyacrylate, Polybutyrale, Polyethylenvinylacetate, Polyethylennaphthylate basieren. Die Kunststofffolien können entspannt, mono- oder biaxial gereckt sein.

Besonders bevorzugt sind im Hinblick auf eine Fertigung des doppelseitigen Haftklebebandes Polyesterfilme basierend auf Polyethylenterephthalat (PET).

Für die Release Funktion werden die Basissubstrate mit mindestens einer Releaseschicht ausgestattet. Die Releaseschicht basiert bevorzugt auf Silikonen, fluorierten Silikonen oder fluorierten Polymeren. Es können als Releaseschicht Verbindungen auf Basis langkettiger aliphatischer Ketten eingesetzt werden.

**Beschichtungsverfahren, Ausrüstung des Trägermaterials**

Zur Herstellung der doppelseitigen Haftklebebänder wird in einer bevorzugten Auslegung die Haftklebemasse aus Lösung auf das Trägermaterial beschichtet. Prinzipiell kann die Klebemasse auch aus der Schmelze aufgetragen werden, welches aber höhere Dickentoleranzen für das Klebeband zur Folge hat.

Für die Beschichtung aus der Schmelze kann es für das Herstellungsverfahren erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet. Zur Beschichtung als Hotmelt können unterschiedliche Beschichtungsverfahren herangezogen werden. In einer Ausführung werden die Haftklebemassen über ein Walzenbeschichtungsverfahren beschichtet. Unterschiedliche Walzenbeschichtungsverfahren sind im "Handbook of Pressure Sensitive Adhesive Technology" von Donatas Satas (van Nostrand, New York 1989) beschrieben. In einer weiteren Ausführung wird über eine Schmelzdüse beschichtet. In einem weiteren bevorzugten Verfahren wird durch Extrusion beschichtet. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals.

Durch die Beschichtung können die Haftklebemassen auch eine Orientierung erfahren.

Weiterhin kann es erforderlich sein, dass die Haftklebemasse vernetzt wird. In einer bevorzugten Ausführung wird mit UV- und/oder Elektronenstrahlung vernetzt.

Zur UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder - Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepasst.

Weiterhin ist es in einer Auslegung möglich, die Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Es können auch beide Vernetzungsverfahren angewendet werden oder andere Verfahren, die hochenergetische Bestrahlung ermöglichen.

Erfindungsgemäß wird die Klebemasse aus Lösung beschichtet. Für sehr dünne Beschichtungen ist das Walzenauftragsverfahren geeignet. Durch eine höhere Verdünnung mit dem Lösungsmittel wird die Dickentoleranz der Beschichtung verbessert, da anschließend das Lösungsmittel verdampft wird. So wird die Dickentoleranz für ein bestimmtes Beschichtungsaggregat durch die Mechanik vorgegeben. Erfolgt die Beschichtung aus Lösung, so wird mit dieser Mechanik eine bestimmte Toleranz für den aus Lösung beschichteten Haftklebefilm erzielt, der sich aber anschließend noch einmal verringert durch das Abdampfen des Lösungsmittels.

Nach der Beschichtung des lösungsmittelhaltigen Haftklebers wird das Lösungsmittel entfernt. Dies geschieht besonders bevorzugt in einem Trockenkanal mit möglichst langer Aufenthaltdauer. Üblicher Weise wird in verschiedenen Temperaturstufen hochgeheizt, um Blasenbildungen zu vermeiden. Weiterhin sollte die finale Trockentemperatur oberhalb des Siedepunktes des Lösungsmittels liegen, um das spätere Ausgasen des doppelseitigen Haftklebebandes zu minimieren.

In ersten Schritt wird die Haftklebemasse auf den Release Liner beschichtet. Dies geschieht bevorzugt aus sehr verdünnter Lösung. In einer bevorzugten Auslegung beträgt der Feststoffgehalt der Lösung weniger als 25 %, sehr bevorzugt weniger als 15 % bezogen jeweils auf den Anteil der Haftklebemasse im Lösungsmittel. Die Beschichtung kann für Masseaufträge von 4-10 g/m$^2$ (fest - nach Trocknung) nach dem Rakelverfahren erfolgen. Für sehr geringe Masseaufträge von 1 - 3 g/m$^2$ wird ein 5 Walzenauftragswerk eingesetzt. Durch die Verwendung von sehr geringen Feststoffgehalten (kleiner 15 % Feststoffgehalt) kann die Schichtdickentoleranz für die Beschichtung des Haftklebebandfilms herabgesetzt werden.

Durch die Verwendung eines Fünfwalzenauftragswerkes kann eine Schichtdickentoleranz z.B. bei einem Masseauftrag von 1 g/m$^2$ (fest - nach Trocknung) von $\pm$ 30 % erzielt werden, was absolut einer Schwankung von 0,3 g/m$^2$ entspricht.

Nach dem ersten Beschichtungsschritt der Haftklebemasse wird in einem Trockenkanal die Klebemasse getrocknet und vom Lösungsmittel entfernt. Die eingebrachte Wärme kann weiterhin zur Initiierung einer thermischen Vernetzungsreaktion genutzt werden. Des Weiteren kann es erforderlich sein, die Masse mit UV und/oder Elektronenstrahlen zu vernetzen. Hierfür können die bereits im Hotmelt Verfahren genannten Technologien eingesetzt werden.

Nach der Beschichtung und Trocknung der Haftklebemasse wird die Trägerfolie zur Klebemasse zukaschiert. Hierfür kann es erforderlich sein, die Trägerfolie mit z.B. Corona vorzubehandeln. Die Kaschierung sollte Blasenfrei erfolgen. Weiterhin ist darauf zu achten, dass die Zugspannungen - insbesondere bei den sehr dünnen Varianten der Trägerfolie - deutlich unterhalb der Reisspannung der Trägerfolie gewählt werden. Die Zugspannung liegt in einer bevorzugten Auslegung mindestens 50 % unterhalb der Reisspannung der Trägerfolie.

Zur Herstellung des doppelseitigen Haftklebebandes muss weiterhin auch die zweite Haftklebemassenschicht aufgetragen werden. Dies kann mit den bereits zuvor genannten Verfahren erfolgen. Prinzipiell kann die Haftklebemasse im zweiten Strich direkt auf die Trägerfolie beschichtet werden (Verbund aus Releaseliner, Haftklebemassenschicht und Trägerfolie). Dies ist aber eine nicht bevorzugte Auslegung, da hier Spannungen im anschließenden Trockenkanal durch den Wärmeeintrag auftreten können. Erfindungsgemäß wird die zweite Haftklebemasse zuerst auch auf einen Releaseliner beschichtet und dieser dann im Trockenkanal getrocknet, um dann diesen Verbund zu dem Verbund aus Releaseliner, Haftklebemasse und Trägerfolie auf die Trägerfolienseite zu zukaschieren. Auf diesem Weg kann die thermische Belastung der Trägerfolie eingespart werden, was für Trägerfolie unterhalb von 4 μm Schichtdicke, besonders bevorzugt von unterhalb 2 μm Schichtdicke von Vorteil ist.

Auch in diesem Prozessschritt kann es erforderlich sein, die Haftklebemassenschicht zusätzlich mit UV und/ oder Elektronenstrahlen nach den zuvor benannten Verfahren zu vernetzen.

Das doppelseitige Haftklebeband wird in dem beschriebenen Verbund als äußerst bevorzugte Variante als Doppelliner Produkt verwendet. Durch die Doppelliner Variante lassen sich Lufteinschlüsse (Fischaugen) und Blasen vermeiden, die die Dickentoleranz des Produktes negativ beeinflussen würden und für Unebenheiten bei der erfinderischen Verwendung im Hinblick auf das Reflektionsverhalten führen würden. Es kann aber auch von Vorteil sein, eine Releaseliner heraus zukaschieren und diesen für den Selben oder anderen Prozess wiederzuverwenden. Dieser Schritt sollte dann aber beim Aufrollen des Haftklebebandes ebenfalls zu keinem Einschluss von Luftblasen oder Fischaugen führen. In einer bevorzugten Weise der Erfindung beträgt die nach dem oben beschriebenen Verfahren erzielte Dickentoleranz des doppelseitigen Haftklebebandes, weniger als 6 μm, besonders bevorzugt weniger als 3 μm, äußerst bevorzugt weniger als 1 μm. Die Grenzwerte berücksichtigen die Gesamtdicke des doppelseitigen Haftklebebandes. So sind 6 μm eine bevorzugte Dickentoleranz für 20 - 29 μm dicke doppelseitige Haftklebebänder, 3 μm eine bevorzugte Dickentoleranz für 10 - 19 μm dicke doppelseitige Haftklebebänder und 1 μm eine bevorzugte Dickentoleranz für 3 - 9 μm dicke doppelseitige Haftklebebänder.

**Erfindungsgemäße Verwendung**

Gegenstand der Erfindung ist weiterhin die Verwendung des doppelseitigen Haftklebebandes zur Verklebung der Reflektionsfolie in dem Gehäuse der Rückseitenbeleuchtungseinheit. Für die Verwendung des Haftklebebandes können die doppelseitigen Haftklebebänder mit einem oder zwei Trennfolien oder Trennpapieren abgedeckt sein. In einem ersten Schritt werden Ausstanzprodukte (Stanzlinge) hergestellt, wobei hier die üblichen Flachbett-, Rotationsstanz- oder Laserdiecut-Verfahren eingesetzt werden können. In einer sehr bevorzugten Auslegung wird das doppelseitige Haftklebeband zuerst auf die Reflektionsfolie vollflächig kaschiert. Hierfür kann er erforderlich sein, den Releaseliner vor dem Laminierschritt zu entfernen. Die Kaschierung der Reflektionsfolie muss ohne Einschluss von Blasen oder Verunreinigungen erfolgen, um Unebenheiten zu vermeiden.

Die Reflektionsfolie kann eine metallisierte Folie sein, die z.B. ein- oder doppelseitig mit Aluminium oder Silber bedampft wurde. Zur Erhöhung der Klimabeständigkeit kann es auch von Vorteil sein, die Reflektionsschicht mit einem transparenten Schutzlack zu versehen. Um besonders hervorragende reflektierende Eigenschaften zu erreichen, muss der Sputterprozeß zur Bedampfung so gesteuert werden, dass das Aluminium oder Silber sehr gleichmäßig aufgetragen ist. Die Reflektionsfolie hat bevorzugt eine Gesamtdicke zwischen 10 und 100 μm, und kann auch eine Prägung aufweisen.

Nach der voll- oder teilflächigen Verklebung des doppelseitigen Haftklebebandes auf der Reflektionsfolie wird diese im Stanzverfahren in die gewünschte Form gebracht.

Hierfür können die zuvor genannten Verfahren eingesetzt werden.

Anschließend wird der Releaseliner vom Verbund Reflektionsfolie und doppelseitiges Haftklebeband entfernt und dann in das Gehäuse der Rückseitenbeleuchtungseinheit platziert. Dies kann auf Kunststoff oder Metall bestehen. In einer sehr bevorzugten Weise werden Kunststoffe wie z.B. Polycarbonat eingesetzt.

Die Applikation erfolgt wiederum vorteilhaft ohne Lufteinschlüsse. Neben der Haltefestigkeit der Reflektionsfolie im Gehäuse ist ein weiteres entscheidendes Kriterium die Wechselklimabeständigkeit. So sollte nach der Verklebung im Wechselklimatest keine Abhebungen der Reflektionsfolie auftreten. Wechselklimatests umfassen zum einen ein

konstantes Klima bei erhöhten Temperaturen und Luftfeuchtigkeit, und zum anderen einen Wechsel zwischen tiefen Temperaturen und hohen Temperaturen in einem bestimmten Zyklus. Vorteilhaft sollten im konstanten Klima bei 85 °C und 85 % Feuchtigkeit (rel. Luftfeuchte) bei Messungen in Zeiträumen von 500 und 1000 Stunden keine Abhebungen auftreten. Weiterhin sollten nach der Verklebung und Lagerung in einem Wechselklima von -40 °C und +85 °C (Rampe von -40 °C auf +85 °C: 1 Stunde) mit jeweils 4 Zyklen alle 24 Stunden bei einer Gesamtlagerzeit von 500 und 1000 Stunden ebenfalls keine Abhebungen stattfinden.

## Experimenteller Teil

Gelpermeationschromatographie GPC:

Die Angaben des gewichtsmittleren Molekulargewichtes Mw und der Polydispersität PD in dieser Schrift beziehen sich auf die Bestimmung per Gelpermeationschromatographie. Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ, $10^3$ Å, ID 8,0 mm x 50 mm verwendet. Zur Auftrennung werden die Säulen des Typs PSS-SDV, 5 µ, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

Messung der Gesamtdicke der Klebebänder und der Schichtdicke der Trägerfolienschichten

Die Angabe der Dicken von Klebebändern und Folienträgern bezieht sich auf die Messung gemäß ASTM D 1000 - 04 (1. September 2004), Nr. 21 bis 27, mit den folgenden Parametern: Scheibendurchmesser 10 mm (Nr. 23.1.2.); Anpressdruck 4 N (Nr. 23.1.3.); Prüfklima: Temperatur 23 °C, 50 % Luftfeuchtigkeit; die Bewertung erfolgte innerhalb einer Stunde; die Messung erfolgte in Abständen von 10 cm in Querrichtung zum laufenden Klebeband.

(Als alternative Bestimmungsmethode kann die AFERA 4000 / PSTC 33 mit den vorstehenden Parametern entsprechend herangezogen werden.)

Standardabweichung s nach

$$s = \sqrt{\frac{1}{n} \cdot \sum_{i=1}^{n} \left(x_i - \bar{x}\right)^2}$$

mit n: Anzahl der Datenwerte, $x_i$: einzelnen Messwerte, $\bar{x}$: Mittelwert aller Messwerte

**Beispiele**

Die Erfindung wird im Folgenden beschrieben, ohne sich durch die Wahl der Beispiele unnötig beschränken zu wollen.

Folgende Prüfmethoden wurden angewendet.

Prüfmethoden

A. Reflektion

Der Reflektionstest wird nach DIN Norm 5063 Teil 3 durchgeführt. Als Messgerät wurde eine Ulbrechtsche Kugel Typ LMT eingesetzt. Der Reflektionsgrad wird als Summe aus gerichteten und gestreuten Lichtanteilen in % angegeben.

B. Klimatest 85 % Luftfeuchtigkeit bei 85 °C

In einer Klimakammer wird das verklebte Bauteil eingelagert. Die Klimakammer wird bei einer Temperatur von 85 °C und 85 % Luftfeuchtigkeit (rel. Feuchte) betrieben. Die verklebten Bauteile werden jeweils nach einer Lagerzeit von 500 und 1000 Stunden entfernt und im Hinblick auf Abhebungen überprüft. Der Test gilt als bestanden, wenn keine Abhebungen zu erkennen sind.

C. Klimawechseltest -40 °C / 85 °C

In einer Wechselklimakammer wird das verklebte Bauteil eingelagert. Die Klimakammer wird bei einer Temperatur von 23 °C und 50 % Luftfeuchtigkeit (rel. Feuchte) gestartet. Zunächst wird innerhalb von 30 min. auf 85 °C / 50 % Luftfeuchtigkeit hochgeheizt. Diese Temperatur wird für 5 Stunden konstant gehalten. Anschließend wird innerhalb einer Stunde auf -40 °C / 0 % Luftfeuchtigkeit herabgekühlt. Dieser Temperatur wird wiederum für 5 Stunden konstant gehalten. Dann wird wieder innerhalb von einer Stunde auf 85 °C / 50 % Luftfeuchtigkeit hochgeheizt und dieses Temperaturniveau für 5 Stunden eingehalten. Dieser Zyklus wird nun konstant durchfahren. Die verklebten Bauteile werden jeweils nach einer Gesamtlagerzeit von 500 und 1000 Stunden entfernt und im Hinblick auf Abhebungen überprüft. Der Test gilt als bestanden, wenn keine Abhebungen zu erkennen sind.

180° Klebkrafttest (Test_D)

Das doppelseitige Haftklebeband wird mit einer 40 μm dicken PVC Folie abgedeckt. Der Haftklebestreifen wurde zweimal mit einem 2 kg Gewicht auf Polycarbonat aufgedrückt. Das Klebeband wurde anschließend sofort mit einer Geschwindigkeit von 300 mm/min und im 180 °-Winkel vom Substrat abgezogen. Die Messergebnisse sind in N/cm angegeben und sind gemittelt aus drei Messungen. Alle Messungen wurden bei Raumtemperatur unter klimatisierten Bedingungen (23 °C / 50 % Luftfeuchtigkeit) durchgeführt.

Polymer 1

Ein für radikalische Polymerisationen konventioneller 200 L-Reaktor wurde mit 2400 g Acrylsäure, 64 kg 2-Ethylhexylacrylat, 6,4 kg N-Isopropylacrylamid und 53,3 kg Aceton/Isopropanol (95:5) befüllt. Nach 45 Minuten Durchleiten von Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurden wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Anschließend wurden 30 Gewichtsprozent eines Kolophoniumharzes (Foral 85, Erweichungstemperatur 85 °C, Hersteller Hercules) hinzugegeben und 0.5 Gewichtsprozent Aluminium(III)acetylacetonat homogen eingerührt. Die Haftklebemasse wurde auf einen Feststoffgehalt von 15 % mit Toluol verdünnt.

**Herstellung der doppelseitigen Haftklebebänder**

Für die Herstellung der doppelseitigen Haftklebebänder werden Polyethylenterephthalatfolien der Firma Mitsubishi Polyester Films gewählt. Die Folien besitzen Schichtdicken von 0,9 μm, 2 μm und 4 μm und sind unter dem Handelsnamen Hostaphan™ RE erhältlich.

Dabei handelt es sich um biaxial orientierte und thermofixierte hochreine PET-Folien, die für Kondensatoranwendungen entwickelt wurden. Der arithmetische Mittenrauhwert (Ra-Wert; Mittelwert der absoluten Werte (vorzeichenfrei) des modifizierten Rauheitsprofils, bezogen auf die Mittellinie über der Bezugsstrecke L) ist etwa 10 nm geringer als der von Standardfolien entsprechender Dicke.

Richtwerte (lt. Hersteller):

Mechanische Werte (ISO 527-1-2; Prüfgeschwindigkeit 100 %/min; 23 °C, 50 % rel. Feuchte): Zugfestigkeit längs 200 N/mm$^2$; quer 200 N/mm$^2$; Reißdehnung längs 100 %; quer 100 %; Elastizitätsmodul längs 4500 N/mm$^2$; quer 5000 N/mm$^2$

Dichte (ASTM-D 1505-68, Methode C; 23 °C): 1,395 g/cm$^2$

Schrumpf (DIN 40634, 150 °C, 15 min): längs < 2,5 %; quer < 2 %

Schmelzpunkt (Differentialthermoanalyse; 3 K/min): 260 °C

Beispiel 1

Die Haftklebemasse ‚Polymer 1' wird aus Lösung auf eine silikonisierte PET-Folie (75 μm Schichtdicke, Hersteller Fa. Siliconature, Silikonsystem abgestuft mit 10 % CRA™) beschichtet. Zur Beschichtung wird ein Fünfwalzenauftragswerk mit einer Walzendurchbiegungskompensation verwendet. Der beschichtete Haftklebemassenfilm wird anschließend in einem 40 m lagen Trockenkanal mit Temperaturstufen von 30 °C / 40 °C / 50 °C / 70 °C / 100 °C und 110 °C getrocknet. Die Bahngeschwindigkeit beträgt 20 m/min. Der Masseauftrag lag nach der Trocknung bei 1,2 g/m$^2$. Im

folgenden Schritt wird eine 0,9 µm PET Folie der Firma Mitsubishi hinzukaschiert.

In einem zweiten Produktionsgang wird wiederum 'Polymer 1' aus Lösung auf eine silikonisierte PET Folie (75 µm Schichtdicke, Hersteller Fa. Siliconature, easy release) beschichtet. Zur Beschichtung wird ein Fünfwalzenauftragswerk mit einer Walzendurchbiegungskompensation verwendet. Der beschichtete Haftklebemassenfilm wird anschließend in einem 40 m lagen Trockenkanal mit Temperaturstufen von 30 °C / 40 °C / 50 °C / 70 °C / 100 °C und 110°C getrocknet. Die Bahngeschwindigkeit beträgt 20 m/min. Der Masseauftrag lag nach der Trocknung bei 1,2 g/m$^2$. Anschließend wurde die Haftklebemasse auf den ersten Verbund aus PET-Film / Haftklebemasse / PET-Releaseliner kaschiert. Die Gesamtdicke des Haftklebebandes betrug 3 µm (ohne Berücksichtigung der PET-Releaseliner). Die Messung der Toleranzen (über eine Breite von 50 cm / 5 Proben) ergab eine maximale Abweichung (4s) von 1 µm.

<u>Beispiel 2</u> (nicht erfindungsgemäβ)

Die Haftklebemasse, Polymer 1' wird aus Lösung auf eine silikonisierte PET-Folie (75 µm Schichtdicke, Hersteller Fa. Siliconature, Silikonsystem abgestuft mit 10 % CRA™) beschichtet. Zur Beschichtung wird ein Komma-Rakel mit einer Durchbiegungskompensation verwendet. Der beschichtete Haftklebemassenfilm wird anschließend in einem 40 m lagen Trockenkanal mit Temperaturstufen von 30 °C / 40 °C / 50 °C / 70 °C / 100 °C und 110°C getrocknet. Die Bahngeschwindigkeit beträgt 20 m/min. Der Masseauftrag lag nach der Trocknung bei 5,5 g/m$^2$. Im folgenden Schritt wird eine 0,9 µm PET Folie der Firma Mitsubishi hinzukaschiert.

In einem zweiten Produktionsgang wird wiederum ‚Polymer 1' aus Lösung auf eine silikonisierte PET-Folie (75 µm Schichtdicke, Hersteller Fa. Siliconature, easy release) beschichtet. Zur Beschichtung wird ein Komma-Rakel mit einer Durchbiegungskompensation verwendet. Der beschichtete Haftklebemassenfilm wird anschließend in einem 40 m lagen Trockenkanal mit Temperaturstufen von 30°C / 40°C / 50°C / 70°C / 100°C und 110°C getrocknet. Die Bahngeschwindigkeit beträgt 20 m/min. Der Masseauftrag lag nach der Trocknung bei 5,5 g/m$^2$. Anschließend wurde die Haftklebemasse auf den ersten Verbund aus PET-Film / Haftklebemasse / PET-Releaseliner kaschiert. Die Gesamtdicke des Haftklebebandes betrug 10 µm (ohne Berücksichtigung der PET-Releaseliner). Die Messung der Toleranzen (über eine Breite von 50 cm / 5 Proben) ergab eine maximale Abweichung (4s) von 2,5 µm.

<u>Beispiel 3</u> (nicht erfindungsgemäβ)

Die Haftklebemasse, Polymer 1' wird aus Lösung auf eine silikonisierte PET Folie (75 µm Schichtdicke, Hersteller Fa. Siliconature, Silikonsystem abgestuft mit 10 % CRA™) beschichtet. Zur Beschichtung wird ein Komma-Rakel mit einer Durchbiegungskompensation verwendet. Der beschichtete Haftklebemassenfilm wird anschließend in einem 40 m lagen Trockenkanal mit Temperaturstufen von 30°C / 40°C / 50°C / 70°C / 100°C und 110°C getrocknet. Die Bahngeschwindigkeit beträgt 20 m/min. Der Masseauftrag lag nach der Trocknung bei 4,5 g/m$^2$. Im folgenden Schritt wird eine 2 µm PET Folie der Firma Mitsubishi hinzukaschiert.

In einem zweiten Produktionsgang wird wiederum ‚Polymer 1' aus Lösung auf eine silikonisierte PET-Folie (75 µm Schichtdicke, Hersteller Fa. Siliconature, easy release) beschichtet. Zur Beschichtung wird ein Komma-Rakel mit einer Durchbiegungskompensation verwendet. Der beschichtete Haftklebemassenfilm wird anschließend in einem 40 m lagen Trockenkanal mit Temperaturstufen von 30°C / 40°C / 50°C / 70°C / 100°C und 110°C getrocknet. Die Bahngeschwindigkeit beträgt 20 m/min. Der Masseauftrag lag nach der Trocknung bei 4,5 g/m$^2$. Anschließend wurde die Haftklebemasse auf den ersten Verbund aus PET-Film / Haftklebemasse / PET-Releaseliner kaschiert. Die Gesamtdicke des Haftklebebandes betrug 10 µm (ohne Berücksichtigung der PET-Releaseliner). Die Messung der Toleranzen (über eine Breite von 50 cm / 5 Proben) ergab eine maximale Abweichung (4s) von 2,5 µm.

<u>Beispiel 4</u> (nicht erfindungsgemäβ)

Die Haftklebemasse ‚Polymer 1' wird aus Lösung auf eine silikonisierte PET-Folie (75 µm Schichtdicke, Hersteller Fa. Siliconature, Silikonsystem abgestuft mit 10 % CRA™) beschichtet. Zur Beschichtung wird ein Komma-Rakel mit einer Durchbiegungskompensation verwendet. Der beschichtete Haftklebemassenfilm wird anschließend in einem 40 m lagen Trockenkanal mit Temperaturstufen von 30°C / 40°C / 50°C / 70°C / 100°C und 110°C getrocknet. Die Bahngeschwindigkeit beträgt 20 m/min. Der Masseauftrag lag nach der Trocknung bei 6,5 g/m$^2$. Im folgenden Schritt wird eine 4 µm PET Folie der Firma Mitsubishi hinzukaschiert.

In einem zweiten Produktionsgang wird wiederum Polymer 1 aus Lösung auf eine silikonisierte PET Folie (75 µm Schichtdicke, Hersteller Fa. Siliconature, easy release) beschichtet. Zur Beschichtung wird ein Komma-Rakel mit einer Durchbiegungskompensation verwendet. Der beschichtete Haftklebemassenfilm wird anschließend in einem 40 m lagen Trockenkanal mit Temperaturstufen von 30°C / 40°C / 50°C / 70°C / 100°C und 110°C getrocknet. Die Bahngeschwindigkeit beträgt 20 m/min. Der Masseauftrag lag nach der Trocknung bei 6,5 g/m$^2$. Anschließend wurde die Haftklebemasse auf den ersten Verbund aus PET-Film / Haftklebemasse / PET-Releaseliner kaschiert. Die Gesamtdicke

des Haftklebebandes betrug 16 μm (ohne Berücksichtigung der PET-Releaseliner). Die Messung der Toleranzen (über eine Breite von 50 cm / 5 Proben) ergab eine maximale Abweichung (4s) von 3 μm.

Referenzbeispiel 1

Als Referenzbeispiel wird ein handelsübliches doppelseitig klebendes Polyesterklebeband mit einer harzmodifizierten Acrylatklebemasse eingesetzt [hier tesa™ 4983 (PV0)], das für die Verklebung von LCD-Reflektionesfolien angeboten wird. Das Haftklebeband weist eine Gesamtdicke von 30 μm auf und besitzt eine Schichtdickentoleranz (4s Spezifikationsgrenze) von 6 μm. Es basiert auf einer Harzmodifizierten Acrylathaftklebemasse und einem 12 μm PET Folienträger.

Reflektionsfolie (Al-Bedampfuna):

Eine transparente 23 μm PET-Folie der Firma Mitsubishi Polyester Films vom Typ RN wird beidseitig mit Aluminium bedampft, bis eine vollflächige Aluminiumschicht auf einer Seite aufgetragen ist. Die Folie wurde in einer Breite von 300 mm nach dem Sputtering Verfahren bedampft. Hier wird positiv geladenes, ionisiertes Argongas in eine Hochvakuumkammer geleitet. Die geladenen Ionen treffen dann auf eine negativ geladenen Al-Platte und lösen auf molekularer Ebene Aluminiumpartikel ab, die sich dann auf den Polyesterfilm, der über die Platte geführt wird, ablagern.

**Ergebnisse**

Die Beispiele 1 bis 2 wurden zusammen mit dem Referenzbeispiel 1 zunächst nach der Testmethode D ausgetestet. Die Ergebnisse sind in Tabelle 1 dargestellt.

Tabelle 1

| Beispiel | Klebkraft PC (Test D) |
|---|---|
| 1 | 0,5 N/cm |
| 2 * | 2,1 N/cm |
| 3 * | 2,0 N/cm |
| 4 * | 3,7 N/cm |
| Referenz 1 | 5,2 N/cm |
| * nicht erfindungsgemäß | |

Den Ergebnissen aus Tabelle 1 kann entnommen werden, dass die Beispiele 1 bis 4 alle Eigenschaften im Sinne von doppelseitigen Klebebändern aufweisen. Referenzbeispiel 1 weist die höchsten Klebkräfte durch den höchsten Masseauftrag und der dicksten Trägerfolienschicht auf.

Im folgenden Test wurden die Beispiele 1 bis 4 und das Referenzbeispiel 1 auf die Reflektionsfolie laminiert, und in 3 x 3 cm großen Quadern ausgestanzt, die dann in ein PC Gehäuse mit einem Anpressdruck von 2 kg appliziert wurden. Nach 24 Stunden Aufziehzeit wurde die gesamte Rückseitenbeleuchtungseinheit mit einem LC-Display verklebt und dann die Testmethoden B und C durchgeführt. Die Ergebnisse sind in Tabelle 2 dargestellt.

| Beispiel | Klimatest (Test B - 500 h) | Klimatest (Test B - 1000 h) | Klimawechseltest (Test C - 500 h) | Klimawechseltest (Test C - 1000 h) |
|---|---|---|---|---|
| 1 | keine Abhebungen | keine Abhebungen | keine Abhebungen | keine Abhebungen |
| 2 * | keine Abhebungen | keine Abhebungen | keine Abhebungen | keine Abhebungen |
| 3 * | keine Abhebungen | keine Abhebungen | keine Abhebungen | keine Abhebungen |
| 4 * | keine Abhebungen | keine Abhebungen | keine Abhebungen | keine Abhebungen |
| Referenz 1 | keine Abhebungen | keine Abhebungen | keine Abhebungen | keine Abhebungen |
| * nicht erfindungsgemäß | | | | |

In keinem Fall konnte nach den Klimabeanspruchungen ein Abheben der Reflektionsfolie beobachtet werden. Es konnte gezeigt werden, dass die dünneren doppelseitigen Haftklebebänder eine genügend hohe Adhäsion aufweisen, um die Reflektionsfolie in der Rückseitenbeleuchtungseinheit zu halten. Somit sind auch deutlich dünnere Aufbauten als 30 μm für diese Anwendung geeignet.

Im letzten Test wurden Reflektionsmessungen nach Testmethode A durchgeführt. Als Referenz wurde die reine Reflektionsfolie vermessen. Anschließend wurden die Beispiele 1 bis 4 und das Referenzbeispiel 1 zur Verklebung der Reflektionsfolie eingesetzt und die Reflektionswerte bestimmt (Frischwerte - Messung sofort nach der Verklebung). Die Werte sind in Tabelle 3 aufgelistet.

| Beispiel | Reflektion (total) (Test A) | Reflektion (diffus) (Test A) |
|---|---|---|
| Reflektionsfolie | 86,9 % | 24,2% |
| 1 | 86,6 % | 28,5 |
| 2 * | 86,4 % | 30,2 |
| 3 * | 86,4 % | 30,8 |
| 4 * | 86,4 % | 31,5 |
| Referenz 1 | 85,9 % | 40,5 |
| *nicht erfindungsgemäß | | |

Den Messungen kann entnommen werden, dass die Beispiele 1 bis 4 eine höhere Lichtreflektion durch eine gleichmäßigere Oberfläche ermöglichen. Die Werte liegen nur knapp oberhalb der Lichtreflektion der nicht verklebten Ursprungsfolie. Die Unebenheiten haben einen besonders großen Einfluss beim diffusen Anteil. Hier zeigt das Referenzbeispiel einen deutlich höheren diffusen Anteil. Die Lichtausbeute der Rückbeleuchtungseinheit kann somit mit den Beispielen 1 bis 4 gesteigert werden.

## Patentansprüche

1. Verfahren zur Herstellung eines doppelseitigen Klebebandes aus einer Trägerfolie und zwei Haftklebemassenschichten, das zur Verklebung von Reflexionsfolien in Rückseitenbeleuchtungseinheiten von Flüssigkristallsystemen geeignet ist, mit einer Gesamtdicke (Mittelwert) des Klebebandes von weniger als 30 μm und einer Standardabweichung der Gesamtdicke des Klebebandes von weniger als 1,25 μm,
wobei

    - eine erste Haftklebemasse aus Lösung auf einen ersten Release Liner beschichtet wird und die erste Haftklebemasse nach der Beschichtung in einem Trockenkanal vom Lösungsmittel befreit wird, so dass eine erste Haftklebemassenschicht auf dem ersten Release Liner entsteht,
    - eine zweite Haftklebemasse aus Lösung auf einen zweiten Release Liner beschichtet wird und die zweite Haftklebemasse nach der Beschichtung in einem Trockenkanal vom Lösungsmittel befreit wird, so dass eine zweite Haftklebemassenschicht auf dem zweiten Release Liner entsteht,
    - nach der Trocknung der ersten Haftklebemasse eine Trägerfolie zu der ersten Haftklebemassenschicht kaschiert wird,
    - die zweite Haftklebemassenschicht nach deren Trocknung auf die noch freie Seite der Trägerfolie kaschiert wird,
    - wobei zumindest die Beschichtung der ersten Haftklebemasse auf den ersten Release Liner mittels eines Fünfwalzenauftragswerkes bewirkt wird
    - und wobei auch die Beschichtung der zweiten Haftklebemasse auf den zweiten Release Liner mittels eines Fünfwalzenauftragswerkes bewirkt wird.

2. Verfahren nach einem der vorangehenden Ansprüche, **dadurch gekennzeichnet, dass**
die Standardabweichung der Gesamtdicke des Klebebandes weniger als 0,75 μm, bevorzugt weniger als 0,65 μm, noch bevorzugter weniger als 0,5 μm beträgt.

3. Verfahren nach einem der vorangehenden Ansprüche, **dadurch gekennzeichnet, dass**
als Trägerschicht ein Folienmaterial mit einer Dicke von 0,5 bis 12 μm, bevorzugt von 0,9 bis 2 μm, eingesetzt wird.

**4.** Verfahren nach einem der vorangehenden Ansprüche, **dadurch gekennzeichnet, dass** als Trägerfolienschicht eine filmische Polymerfolie eingesetzt wird.

**5.** Verfahren nach einem der vorangehenden Ansprüche, **dadurch gekennzeichnet, dass** als Trägerschicht eine Kondensatorfolie eingesetzt wird.

**6.** Verfahren nach einem der vorangehenden Ansprüche, **dadurch gekennzeichnet, dass** die Trägerfolie eine Dickentoleranz von maximal 0,5 μm, bevorzugt von maximal 0,2 μm aufweist.

**7.** Verfahren nach einem der vorangehenden Ansprüche, **dadurch gekennzeichnet, dass** die Haftklebemassenschichten ein Flächengewicht von jeweils 10 $g/m^2$, bevorzugt 3 $g/m^2$ nicht überschreiten.

**8.** Verfahren nach einem der vorangehenden Ansprüche, **dadurch gekennzeichnet, dass** die Gesamtdicke des Klebebandes zwischen 2 und 29 μm, bevorzugt zwischen 3 und 21 μm liegt.

## Claims

**1.** Process for producing a double-sided adhesive tape consisting of a carrier film and two pressure-sensitive adhesive layers, and being suitable for bonding reflective films in backlighting units of liquid-crystal systems, having an overall adhesive tape thickness (average) of less than 30 μm and a standard deviation in overall adhesive tape thickness of less than 1.25 μm,
where

- a first pressure-sensitive adhesive is coated from solution onto a first release liner, and, after coating, the first pressure-sensitive adhesive is freed from the solvent in a drying tunnel, to give a first layer of pressure-sensitive adhesive on the first release liner,
- a second pressure-sensitive adhesive is coated from solution onto a second release liner, and, after coating, the second pressure-sensitive adhesive is freed from the solvent in a drying tunnel, to give a second layer of pressure-sensitive adhesive on the second release liner,
- after the drying of the first pressure-sensitive adhesive, a carrier film is laminated to the first layer of pressure-sensitive adhesive,
- the second layer of pressure-sensitive adhesive, after it has been dried, is laminated onto the remaining free side of the carrier film,
- where at least the coating of the first pressure-sensitive adhesive onto the first release liner is brought about by means of a five-roll applicator,
- and where the coating of the second pressure-sensitive adhesive onto the second release liner is also brought about by means of a five-roll applicator.

**2.** Process according to either of the above claims, **characterized in that** the standard deviation in overall adhesive tape thickness is less than 0.75 μm, preferably less than 0.65 μm, more preferably less than 0.5 μm.

**3.** Process according to either of the above claims, **characterized in that** a film material having a thickness of 0.5 to 12 μm, preferably 0.9 to 2 μm, is used as carrier layer.

**4.** Process according to any one of the preceding claims, **characterized in that** a filmy polymer film is used as carrier film layer.

**5.** Process according to any one of the preceding claims, **characterized in that** a capacitor film is used as carrier layer.

**6.** Process according to any one of the preceding claims, **characterized in that** the carrier film has a thickness tolerance of not more than 0.5 μm, preferably of not more than 0.2 μm.

**7.** Process according to any one of the preceding claims, **characterized in that** the pressure-sensitive adhesive layers each do not exceed a weight per unit area of 10 $g/m^2$, preferably 3 $g/m^2$.

**8.** Process according to any one of the preceding claims, **characterized in that** the overall adhesive Lape thickness is between 2 and 29 pm, preferably between 3 and 21 μm.

## Revendications

1. Procédé pour la fabrication d'une bande adhésive double face constituée par une feuille support et deux couches de masse autoadhérive, appropriée pour le collage de feuilles de réflexion dans des unités de rétroéclairage de systèmes à cristaux liquides, présentant une épaisseur totale (valeur moyenne) de la bande adhésive inférieure à 30 μm et une déviation standard de l'épaisseur totale de la bande adhésive inférieure à 1,25 μm,

   - une première masse autoadhésive étant revêtue à partir d'une solution sur une première feuille antiadhésive et la première masse autoadhésive étant libérée du solvant après le revêtement dans un canal de séchage, de manière telle qu'il se forme une première masse autoadhésive sur la première feuille antiadhésive,
   - une deuxième masse autoadhésive étant revêtue à partir d'une solution sur une deuxième feuille antiadhésive et la deuxième masse autoadhésive étant libérée du solvant après le revêtement dans un canal de séchage, de manière telle qu'il se forme une deuxième masse autoadhésive sur la deuxième feuille antiadhésive,
   - après le séchage de la première masse autoadhésive, une feuille support étant collée sur la première couche de masse autoadhésive,
   - la deuxième couche de masse autoadhésive étant collée, après son séchage, sur la face encore libre de la feuille support,
   - au moins le revêtement de la première masse autoadhésive sur la première feuille antiadhésive étant réalisé par un dispositif d'application à cinq cylindres
   - et le revêtement de la deuxième masse autoadhésive sur la deuxième feuille antiadhésive étant également réalisé par un dispositif d'application à cinq cylindres.

2. Procédé selon l'une quelconque des revendications précédentes, **caractérisé en ce que** la déviation standard de l'épaisseur totale de la bande adhésive est inférieure à 0,75 μm, de préférence inférieure à 0,65 μm, encore plus préférablement inférieure à 0,5 μm.

3. Procédé selon l'une quelconque des revendications précédentes, **caractérisé en ce qu'**on utilise comme couche support un matériau en feuille d'une épaisseur de 0,5 à 12 μm, de préférence de 0,9 à 2 μm,

4. Procédé selon l'une quelconque des revendications précédentes, **caractérisé en ce qu'**une feuille en film polymère est utilisée comme couche de feuille support.

5. Procédé selon l'une quelconque des revendications précédentes, **caractérisé en ce qu'**on utilise comme couche support une feuille de condensateur.

6. Procédé selon l'une quelconque des revendications précédentes, **caractérisé en ce que** la feuille support présente une tolérance d'épaisseur d'au maximum 0,5 μm, de préférence d'au maximum 0,2 μm.

7. Procédé selon l'une quelconque des revendications précédentes, **caractérisé en ce que** les couches de masse autoadhésive ne dépassent pas un poids surfacique à chaque fois de 10 g/m$^2$, de préférence de 3 g/m$^2$.

8. Procédé selon l'une quelconque des revendications précédentes, **caractérisé en ce que** l'épaisseur totale de la bande adhésive se situe entre 2 et 29 μm, de préférence entre 3 et 21 μm.

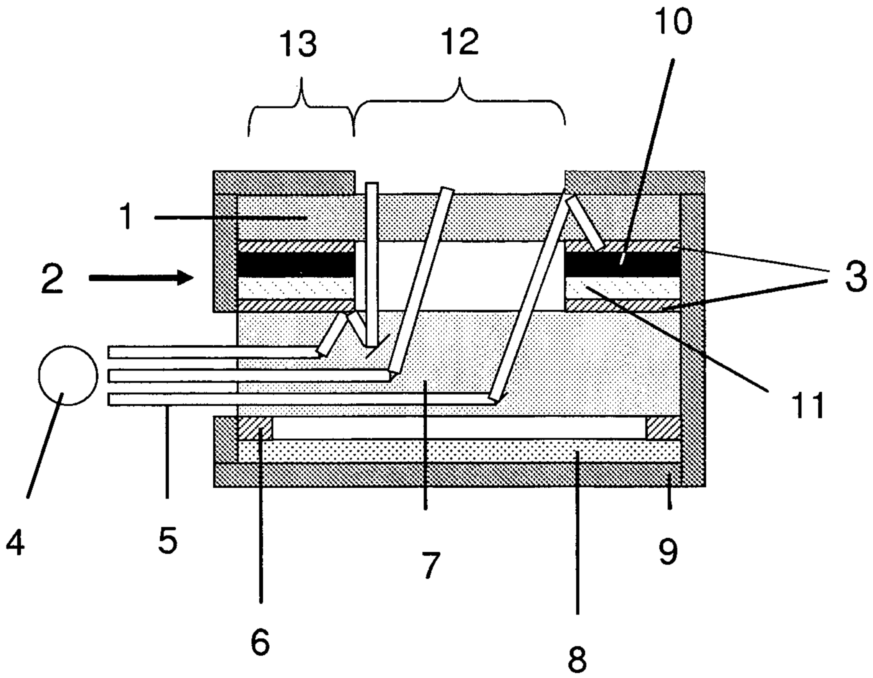


Fig. 1

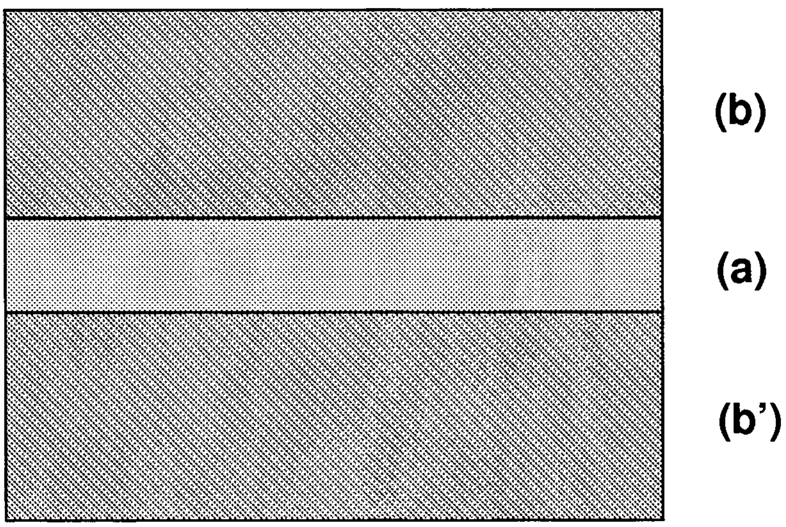


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1520896 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- **DONATAS SATAS.** Handbook of Pressure Sensitive Adhesive Technology. van Nostrand, 1989
- **DONATAS SATAS.** Handbook of Pressure Sensitive Adhesive Technology. van Nostrand, 1989, 444-514
- **FOUASSIER.** Photoinitiation, Photopolymerization and Photocuring: Fundamentals and Applications. Hanser-Verlag, 1995
- Chemistry and Technology of UV and EB Formulation for Coatings. **CARROY et al.** Inks and Paints. SITA, 1994
- **DONATAS SATAS.** Handbook of Pressure Sensitive Adhesive Technology. 1989
- **T.G. FOX.** *Bull. Am. Phys. Soc.,* 1956, vol. 1, 123
- **HOUBEN WEYL.** *Methoden der Organischen Chemie,* vol. E 19a, 60-147
- *Macromolecules,* 1995, vol. 28, 7886
- Chemistry and Technology of UV and EB formulation for Coatings. Inks and Paints. SITA, 1991, vol. 1